# EUROPEAN PATENT SPECIFICATION

(11) **EP 4 343 914 B1**
(45) Date of publication and mention of the grant of the patent: **16.09.2026**
(21) Application number: 23749990.0
(22) Date of filing: 03.02.2023
(51) Int. Cl.: H01M 10/0567, H01M 4/525, H01M 4/505, H01M 4/587, H01M 10/42, H01M 10/0525, H01M 4/02

(54) **LITHIUM SECONDARY BATTERY**
LITHIUMSEKUNDÄRBATTERIE
BATTERIE SECONDAIRE AU LITHIUM

(30) Priority: 03.02.2022 KR 20220014469
(43) Date of publication of application: 27.03.2024
(73) Proprietor: LG Energy Solution, Ltd., Seoul 07335 (KR)
(72) Inventor: OH, Young Ho, Daejeon 34122 (KR); AHN, Kyoung Ho, Daejeon 34122 (KR); SHIN, Won Kyung, Daejeon 34122 (KR); LEE, Won Tae, Daejeon 34122 (KR); LEE, Chul Haeng, Daejeon 34122 (KR); HAN, Jun Hyeok, Daejeon 34122 (KR); JI, Su Hyeon, Daejeon 34122 (KR); JEONG, You Kyeong, Daejeon 34122 (KR)
(74) Representative: Hoffmann Eitle
(86) International application number: PCT/KR2023/001613
(87) International publication number: WO 2023/149757

(56) References cited:
- EP-A1- 4 007 012
- EP-A1- 4 394 970
- WO-A1-2021/020005
- JP-A- 2012 043 632
- JP-A- 2012 119 091
- JP-A- 2012 119 091
- KR-A- 20210 031 159
- KR-A- 20210 153 122
- KR-A- 20210 155 370

## Description

### TECHNICAL FIELD

This application claims the benefit of Korean Patent Application No. 10-2022-0014469, filed on February 03, 2022, in the Korean Intellectual Property Office.

The present invention relates to a lithium secondary battery including a non-aqueous electrolyte.

### BACKGROUND ART

There is a need to develop battery technology for efficiently storing and utilizing electrical energy as personal IT devices and computer networks are developed with the recent development of information society and the accompanying dependency of society as a whole on electrical energy is increased.

In particular, studies on electricity storage devices, such as electric double-layer capacitors and lithium ion batteries, have been extensively conducted as an interest in solving environmental problems and realizing a sustainable circular society emerges.

Among these electricity storage devices, the lithium ion batteries are in the spotlight as battery systems having the theoretically highest energy density.

The lithium ion battery is largely composed of a positive electrode formed of a transition metal oxide containing lithium, a negative electrode capable of storing lithium, an electrolyte that becomes a medium for transferring lithium ions, and a separator, and, among them, a significant amount of research on the electrolyte has been conducted while the electrolyte is known as a component that greatly affects stability and safety of the battery.

Meanwhile, as the lithium secondary battery is charged and discharged, the positive electrode active material is structurally collapsed due to the decomposition product of the lithium salt contained in the electrolyte, and the positive electrode performance may deteriorate, and transition metal ions may be eluted from the surface of the positive electrode during the collapse of the positive electrode structure. The eluted transition metal ions are electro-deposited on the positive electrode or the negative electrode, thereby increasing resistance of the positive electrode or deteriorating the negative electrode and destroying solid electrolyte interphase (SEI), thereby causing additional decomposition of electrolyte, resulting in increasing resistance of battery, degrading life, and the like.

This phenomenon of deterioration in battery performance tends to be further accelerated when the potential of the positive electrode is increased or when the battery is exposed to high temperatures.

Accordingly, there is an urgent need to study an electrolyte capable of forming a stable SEI film on the surface of the electrode in order to suppress elution of transition metal ions from the positive electrode or prevent the negative electrode from deteriorating.

JP 2012-119091 A and WO 2021/020005 A1 disclose lithium secondary batteries comprising non-aqueous electrolytes which comprise fluorine-containing (meth)acrylic acid derivatives.

EP 4 394 970 A1, which is prior art under Article 54(3) EPC, discloses a secondary battery comprising a non-aqueous electrolyte which comprises an additive having polar and nonpolar groups.

### DISCLOSURE OF THE INVENTION

### TECHNICAL PROBLEM

An aspect of the present invention provides a lithium secondary battery including a non-aqueous electrolyte having a composition capable of forming, on the surface of the electrode, a film which is stable even at high temperatures and has low resistance.

That is, an aspect of the present invention provides a lithium secondary battery having an improvement in high-temperature stability, flame retardancy of the battery, and high-temperature performance by including the non-aqueous electrolyte for a lithium secondary battery.

### TECHNICAL SOLUTION

According to an aspect of the present invention, there is provided a lithium secondary battery including a negative electrode, a positive electrode, a separator interposed between the negative electrode and the positive electrode, and a non-aqueous electrolyte; wherein the non-aqueous electrolyte includes a lithium salt, a non-aqueous organic solvent, a first additive which is a compound represented by Formula 1 below, and a second additive which is at least one selected from the group consisting of vinylene carbonate and vinylethylene carbonate; the positive electrode contains a positive electrode active material of Formula 2 below as a positive electrode active material; and the negative electrode contains, as a negative electrode active material, a carbon material capable of reversibly intercalating/deintercalating lithium ions.

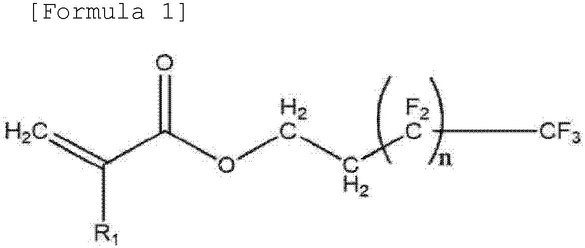

In Formula 1 above, R₁ is hydrogen or an alkyl group having 1 to 5 carbon atoms, and n is an integer of 4 to 8.

[Formula 2] LiₓNiₐCo_{b}M¹_{c}M²_{d}O₂

In Formula 2 above, M¹ is Mn or a combination of Mn and Al, M² is at least one selected from the group consisting of Zr, B, W, Mg, Ce, Hf, Ta, La, Ti, Sr, Ba, F, P, and S, 0.90≤x≤1.1, 0.80≤a<1.0, 0<b<0.2, 0<c<0.2, and 0≤d≤0.1.

### ADVANTAGEOUS EFFECTS

The compound represented by Formula 1 of the present invention includes an acrylate group and a fluorine-substituted alkyl group having at least 4 carbon atoms in the structure, thereby forming a robust SEI film containing a fluorine element on the surface of the electrode.

Specifically, the compound represented by Formula 1 of the present invention may be electrochemically decomposed on the surface of the electrode before the decomposition of vinylene carbonate and/or vinylethylene carbonate to form a stable film, as well as may accelerate additional film formation reactions of vinylene carbonate and/or vinylethylene carbonate.

In addition, in the non-aqueous electrolyte of the present invention, the compound represented by Formula 1 may have an alkyl group substituted with a fluorine element having excellent flame retardancy and incombustibility contained in the molecular structure, the alkyl group serving as a radical scavenger due to the fluorine element, and may also secure excellent oxidation resistance.

Also, the present invention has the effects of easily suppressing radicals formed due to structural instability of the high-nickel positive electrode active material, and improving flame retardancy and oxidation resistance of the lithium secondary battery by applying, a combination of a first additive and a second additive together with a high-nickel positive electrode active material, as a positive electrode active material of the lithium secondary battery, and a carbon material which can reversibly intercalate/deintercalate lithium ions. In addition, after the reduction reaction of the first additive, which is reduced at a higher potential, the reduction reaction of the second additive is carried out in stages so that a film resulting from the second additive is formed on the film resulting from the first additive, thereby forming a film having excellent durability. As a result, it is possible to implement a lithium secondary battery having excellent high-temperature stability, flame retardancy of the battery, and high-temperature performance.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Meanwhile, it will be further understood that the terms "include," "comprise," "have," or the like in this specification specify the presence of stated features, numbers, steps, elements, or combinations thereof, but do not preclude the presence or addition of one or more other features, numbers, steps, elements, or combinations thereof.

In addition, before describing the present invention, the expressions "a" and "b" in the description of "a to b carbon atoms" in the specification each denote the number of carbon atoms included in a specific functional group. That is, the functional group may include "a" to "b" carbon atoms. For example, the expression "alkyl group having 1 to 5 carbon atoms" denotes an alkyl group including 1 to 5 carbon atoms, that is, -CH₃, -CH₂CH₃, -CH₂CH₂CH₃, -CH(CH₃)CH₃, and -CH(CH₃)CH₂CH₃.

In addition, in the present specification, an alkyl group or an alkylene group may all be substituted or unsubstituted. Unless otherwise defined, the term "substituted" means that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, a nitrile group, an aryl group having 6 to 20 carbon atoms, a heteroaryl group having 2 to 20 carbon atoms, or a haloaryl group having 6 to 20 carbon atoms.

### Non-aqueous Electrolyte

### (1) Lithium Salt

First, the lithium salt will be described as follows.

Any lithium salt typically used in a non-aqueous electrolyte for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, (PO₂F₂)⁻, (FSO₂)(POF₂)N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis (fluorosulfonyl) imide, LiFSI), LiN(SO₂CF₂CF₃)₂ (lithium bis(perfluoroethanesulfonyl)imide, LiBETI), and LiN(SO₂CF₃)₂ (lithium bis(trifluoromethanesulfonyl)imide, LiTFSI) or a mixture of two or more thereof. In addition to the above, any lithium salt commonly used in an electrolyte of a lithium secondary battery may be used without limitation.

The lithium salt may be appropriately changed in a normally usable range, but may be included in a concentration of 0.1 M to 4.0 M, preferably, 0.5 M to 3.0 M, and most preferably, 0.5 M to 2.0 M in the electrolyte solution to obtain an optimum effect of forming a film for preventing corrosion of the surface of the electrode. In the case where the concentration of the lithium salt satisfies the above range, viscosity of the non-aqueous electrolyte may be controlled so that optimal wettability may be achieved, and an effect of improving capacity characteristics and cycle characteristics of the lithium secondary battery may be obtained by improving mobility of lithium ions.

### (2) Non-aqueous Organic Solvent

Various organic solvents typically used in a non-aqueous electrolyte may be used as the non-aqueous organic solvent without limitation, wherein a type of the non-aqueous organic solvent is not limited as long as the non-aqueous organic solvent may minimize decomposition due to an oxidation reaction during charge and discharge of the secondary battery and may exhibit desired characteristics with the additive.

Specifically, the non-aqueous organic solvent may include a cyclic carbonate-based organic solvent, a linear carbonate-based organic solvent, a linear ester-based organic solvent, or a mixed organic solvent thereof.

The cyclic carbonate-based organic solvent is a highly viscous organic solvent which well dissociates the lithium salt in the non-aqueous electrolyte due to high permittivity, wherein specific examples thereof may include at least one organic solvent selected from the group consisting of ethylene carbonate (EC), propylene carbonate (PC), 1,2-butylene carbonate, 2,3-butylene carbonate, 1,2-pentylene carbonate, and 2,3-pentylene carbonate, and, among them, the cyclic carbonate-based organic solvent may include ethylene carbonate.

The linear carbonate-based organic solvent is an organic solvent having low viscosity and low permittivity, wherein specific examples thereof may include at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and specifically, may include ethyl methyl carbonate (EMC).

The linear ester-based organic solvent is a solvent having relatively high stability during high temperature and high voltage driving as compared with the cyclic carbonate-based organic solvent, and may improve disadvantages of the cyclic carbonate-based organic solvent that causes gas generation during high temperature driving and may also achieve high ion conductivity.

Specific examples of the linear ester-based organic solvent may include at least one selected from the group consisting of methyl acetate, ethyl acetate, propyl acetate, methyl propionate, ethyl propionate, propyl propionate, and butyl propionate, and specifically may include at least one among ethyl propionate and propyl propionate.

In addition, the non-aqueous electrolyte solution of the present invention may further include a cyclic ester-based organic solvent as necessary.

Also, the cyclic ester-based organic solvent may include at least one selected from the group consisting of γ-butyrolactone, γ-valerolactone, γ-caprolactone, σ-valerolactone, and ε-caprolactone.

### (3) First Additive

The non-aqueous electrolyte according to the present invention includes a compound represented by Formula 1 below as a first additive:

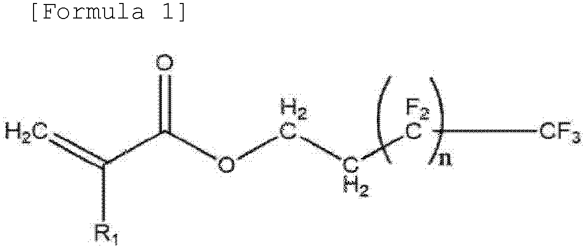

In Formula 1 above, R₁ is hydrogen or an alkyl group having 1 to 5 carbon atoms, and preferably, R₁ may be hydrogen.

In Formula 1 above, n is an integer of 4 to 8, preferably an integer of 5 to 8. When the integer of n satisfies the above range, the thermal properties of the compound itself may be increased, and the stability of a film formed therefrom may be expected. If n is less than 3 in Formula 1 above, as the molecules become smaller and the fluorine element content becomes smaller, the boiling point decreases, and thus the flame retardancy deteriorates, and the molecule becomes vulnerable to the electrochemical decomposition so that the high-temperature durability deteriorates. Accordingly, gas generation and deterioration of swelling characteristics may occur during high temperature storage. In addition, in Formula 1 above, when n is greater than 8, a material viscosity and non-polarity may increase as excess fluorine elements are contained, and thus the solubility to the electrolyte may decrease, thereby resulting in the deterioration of battery performance.

Specifically, the compound represented by Formula 1 above may include at least one among compounds represented by Formula 1-1 and Formula 1-2 below:

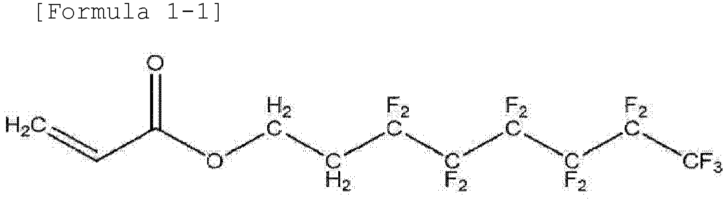

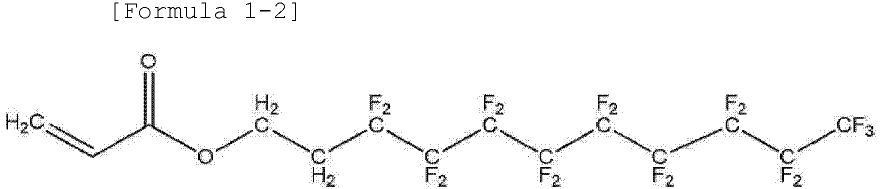

The compound represented by Formula 1 above may form a robust SEI film containing a fluorine element on the surface of the negative electrode as the double bond (C=C) functional group contained in the molecular structure causes an electrochemical reaction during an electrochemical decomposition reaction. In addition, an alkyl group substituted with a fluorine element having excellent flame retardancy and incombustibility contained in the molecular structure serves as a radical scavenger due to the fluorine element on the surface of the positive electrode, and simultaneously a passivation layer capable of securing excellent oxidation resistance may be formed. As a result, side reactions of the electrodes and the electrolyte solution are controlled, and the lithium secondary battery having improved life characteristics at room temperature and low temperatures may be provided.

In particular, since the compound represented by Formula 1 of the present invention contains an ethylene group (-CH₂-CH₂-) between an acrylate functional group and a terminal fluorine-substituted alkyl group, the flexibility of the compound is increased due to an increase in the molecular chain of the linking group part compared to a compound containing a methylene group (-CH₂-) between an acrylate functional group and a terminal fluorine-substituted alkyl group, such as 2,2,3,3,4,4,4-heptafluorobutyl acrylate. As a result, the compound-derived film may form a film with more improved durability on the surface of the negative electrode.

Vinylene carbonate and/or vinylethylene carbonate form a stable film during the driving of battery and are thus used as electrolyte additives. However, at the initial stage of driving the battery, when a compound including three or more oxygen elements in a unit structure, such as vinylene carbonate and/or vinylethylene carbonate, forms an electrode film, there is a limitation in that oxidation safety is deteriorated and side reactions occur a lot on the surface of the electrode. On the other hand, since the compound represented by Formula 1 of the present invention is electrochemically decomposed in the electrode before the decomposition of vinylene carbonate and/or vinylethylene carbonate to form a stable film on the surface of the electrode, side reactions on the surface of the electrode may be suppressed. That is, since the compound represented by Formula 1 of the present invention has a structural characteristic in which two oxygen elements are contained in the molecular structure as described above, and the acrylate functional group and the terminal fluorine-substituted alkyl group are linked (bonded) through the ethylene group (-CH₂-CH₂-), it is possible to suppress an increase in interfacial resistance by forming a robust SEI having a low resistance on the surface of the electrode before the side reactions occur, as well as to suppress the side reaction between the electrode and the electrolyte by preventing the surface of the electrode from being exposed. As a result, since the SEI film is strengthened in the negative electrode and the transition metal is effectively controlled to be eluted from the positive electrode, the high temperature stability may be enhanced, thereby implementing the lithium secondary battery which has excellent high-temperature storage characteristics and high-temperature cycle characteristics and in which a battery swelling phenomenon may be reduced.

The first additive may be contained in an amount of 0.1 wt% to 5 wt%, preferably 0.1 wt% to 4 wt%, and more preferably 2 wt% to 4 wt%, with respect to the total weight of the non-aqueous electrolyte. When the content of the first additive satisfies the above range, a stable film may be formed to effectively suppress the elution of transition metals from the positive electrode at a high temperature, thereby achieving excellent high-temperature durability. That is, when the first additive is contained in the non-aqueous electrolyte in an amount of 0.1 wt% or more, the film formation effect is improved to form a stable SEI film even when the battery is stored at a high temperature, thereby preventing an increase in resistance and a decrease in capacity even after the high-temperature storage to improve overall performance. In addition, when the first additive is contained in an amount of 5 wt% or less, an excessively thick film may be prevented from being formed during initial charging to prevent an increase in resistance, thereby preventing deterioration of the initial capacity and the output characteristics of the secondary battery.

### (4) Second Additive

The non-aqueous electrolyte of the present invention includes, as a second additive, at least one selected from the group consisting of vinylene carbonate and vinylethylene carbonate. Preferably, including both vinylene carbonate and vinylethylene carbonate as the second additive may most increase the high-temperature stability.

Vinylene carbonate and/or vinylethylene carbonate, which are the second additives, are materials capable of forming a stable SEI film during driving the battery, and in particular, may be used together with the compound represented by Formula 1 of the present invention to facilitate an enhanced film formation reaction.

The second additive may be contained in an amount of 0.01 wt% to 3 wt%, preferably 0.10 wt% to 1.5 wt%, and more preferably 0.1 wt% to 1 wt% with respect to the total weight of the non-aqueous electrolyte. When the content of the second additive satisfies the above range, a stable film may be formed on the negative electrode and the positive electrode, thereby assisting in improving the life of the secondary battery.

Meanwhile, in the non-aqueous electrolyte for a lithium secondary battery of the present invention, the weight ratio of the first additive and the second additive may be 1:0.002 to 1:30. Preferably, it may be 1:0.1 to 1:15, more preferably 1:0.2 to 1:10.

When the weight ratio of the first additive and the second additive is within the above range, the reduction reaction of the first additive may not only form a negative electrode film alone, but may also facilitate the reduction reaction of the second additive, thereby assisting in forming a film having excellent durability. Also, a flame retardancy effect and high-temperature stability may be provided due to a radical generation inhibiting effect, which is caused by a fluorine component of the additive.

### (5) Third Additive

In addition, the non-aqueous electrolyte of the present invention may further include other third additives in order to prevent the non-aqueous electrolyte from being decomposed in a high-output environment and causing a negative electrode to collapse, or in order to further improve low-temperature high-rate discharge characteristics, high-temperature stability, overcharge prevention, an effect of suppressing battery expansion at high temperatures, and the like.

Examples of such third additives may include at least one selected from the group consisting of a halogen-substituted carbonate-based compound, a sultone-based compound, a sulfate-based compound, a phosphate-based or phosphite-based compound, a borate-based compound, a benzene-based compound, an amine-based compound, a silane-based compound, and a lithium salt-based compound.

The halogen-substituted carbonate-based compound may include fluoroethylene carbonate (FEC).

The sultone-based compound, for example, may be at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

The sulfate-based compound, for example, may be ethylene sulfate (Esa), trimethylene sulfate (TMS), or methyl trimethylene sulfate (MTMS).

The phosphate-based or phosphite-based compound, for example, may be at least one compound selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The borate-based compound may include tetraphenylborate, lithium oxalyldifluoroborate (LiODFB) capable of forming a film on the surface of the negative electrode, or lithium bis(oxalato)borate (LiB(C₂O₄)₂, LiBOB).

The benzene-based compound may be fluorobenzene, the amine-based compound may be triethanolamine or ethylene diamine, and the silane-based compound may be tetravinylsilane.

The lithium salt-based compound is a compound different from the lithium salt contained in the non-aqueous electrolyte, wherein the lithium salt-based compound may include LiPO₂F₂, LiBF₄, or the like.

Among these third additives, in order to form a more robust SEI film on the surface of the negative electrode during the initial activation process, a third additive having an excellent film formation effect, specifically, at least one selected from the group consisting of propene sultone, ethylene sulfate, fluoroethylene carbonate (FEC), LiBF₄, and lithium oxalyldifluoroborate (LiODFB) may be included on the surface of the negative electrode.

Two or more compounds may be mixed and used as the third additive, and the third additive may be contained in an amount of 0.01 wt% to 20 wt%, particularly 0.1 wt% to 5 wt% with respect to the total weight of the non-aqueous electrolyte.

When the third additive is contained in an amount within the above range, a secondary battery having more improved overall performance may be prepared. For example, when the third additive is contained in an amount of 0.01 wt% or more, there is an effect of improving the durability of the SEI film at a maximum level of suppressing an increase in resistance, and when the third additive is contained in an amount of 20 wt% or less, there is an effect of maintaining the SEI film for a long period of time within an acceptable resistance increase.

### Lithium Secondary Battery

The present invention provides a lithium secondary battery including a positive electrode; a negative electrode; a separator interposed between the positive electrode and the negative electrode; and the above-described non-aqueous electrolyte of the present invention.

The lithium secondary battery of the present invention may be prepared by forming an electrode assembly, in which a positive electrode, a negative electrode, and a separator between the positive electrode and the negative electrode are sequentially stacked, accommodating the electrode assembly in a battery case, and then injecting the non-aqueous electrolyte solution of the present invention thereto.

A typical method known in the art may be used as a method of preparing the lithium secondary battery of the present invention, and, specifically, the method of preparing the lithium secondary battery of the present invention is as described below.

### (1) Positive Electrode

The positive electrode according to the present invention includes a positive electrode active material layer including a positive electrode active material, and, if necessary, the positive electrode active material layer may further include a conductive agent and/or a binder.

The positive electrode according to the present invention includes a lithium-nickel-manganese-cobalt-based oxide represented by Formula 2 below as a positive electrode active material. In particular, when a combination of the first additive and the second additive together is included with a high-nickel positive electrode active material such as Formula 2 as the positive active material of the lithium secondary battery, radicals formed due to structural instability of the high-nickel positive electrode active material may be easily suppressed. Thus, there is an effect of improving the flame retardancy and oxidation resistance of the lithium secondary battery.

[Formula 2] LiₓNiₐCo_{b}M¹_{c}M²_{d}O₂

In Formula 2 above, M¹ is Mn or a combination of Mn and Al.
M² is at least one selected from the group consisting of Zr, B, W, Mg, Ce, Hf, Ta, La, Ti, Sr, Ba, F, P, and S.
x above represents an atomic fraction of the lithium in the lithium transition metal oxide, wherein x satisfies 0.90≤x≤1.1, preferably 0.95≤x≤1.08, and more preferably 1.0≤x≤1.08.
a above represents an atomic fraction of nickel among the metallic elements other than the lithium in the lithium transition metal oxide, and satisfies 0.80≤a<1.0, preferably 0.80≤a≤0.95, and more preferably 0.80≤a≤0.90. When the nickel content satisfies the above range, high capacity characteristics may be achieved.
b above represents an atomic fraction of cobalt among metallic elements other than the lithium in the lithium transition metal oxide, and satisfies 0<b<0.2, preferably 0<b≤0.15, and more preferably 0.01≤b≤0.10.
c above represents an atomic fraction of M¹ among the metallic elements other than the lithium in the lithium transition metal oxide, and satisfies 0<c<0.2, preferably 0<c≤0.15, and more preferably 0.01≤c≤0.10.
d above represents an atomic fraction of M² among the metallic elements other than the lithium in the lithium transition metal oxide, and satisfies 0≤d≤0.1, preferably 0≤d≤0.05.

The positive electrode active material is a compound capable of further reversibly intercalating and deintercalating lithium, and specifically, the positive electrode active material may further include a lithium metal oxide including lithium and at least one metal such as cobalt, manganese, nickel, or aluminum. More specifically, the lithium metal oxide may include a lithium-manganese-based oxide (*e*.*g*., LiMnO₂, LiMn₂O₄), a lithium-cobalt-based oxide (*e*.*g*., LiCoO₂) , a lithium-nickel-based oxide (*e*.*g*., LiNiO₂), a lithium-nickel-manganese-based oxide (*e*.*g*., LiNi_{1-Y}Mn_{Y}O₂ (where 0<Y<1) , LiMn_{2-z}Ni_{z}O₄ (where 0<z<2)), a lithium-nickel-cobalt-based oxide (*e*.*g*., LiNi_{1-Y1}Co_{Y1}O₂ (where 0<Y1<1)), a lithium-manganese-cobalt-based oxide (*e*.*g*., LiCo_{1-Y2}Mn_{Y2}O₂ (where 0<Y2<1), LiMn_{2-z1}Co_{z1}O₄(where 0< z 1<2)), a lithium-nickel-manganese-cobalt-based oxide (*e*.*g*., Li(NiₚCo_{q}Mnᵣ)O₂ (where 0<p<1, 0<q<1, 0< r<1, and p+q+r=1) or Li (Niₚ₁Co_{q1}Mnᵣ₁)O₄ (where 0<p1<2, 0<q1<2, 0<r1<2, and p1+q1+r1=2)), a lithium-nickel-cobalt-transition metal (M) oxide (*e*.*g*., Li(Niₚ₂Co_{q2}Mnᵣ₂Mₛ₂)O₂ (where M is selected from the group consisting of Al, Fe, V, Cr, Ti, Ta, Mg, and Mo, and p2, q2, r2, and s2 are atomic fractions of each independent elements, wherein 0<p2<1, 0<q2<1, 0<r2<1, 0< s 2<1, and p2+q2+r2+s2=1)), or a lithium-iron phosphate (*e*.*g*., Li₁₊ₐFe₁₋ₓMₓ(PO_{4-b})X_{b} (where, M includes any one or two or more elements selected from the group consisting of Al, Mg, Ni, Co, Mn, Ti, Ga, Cu, V, Nb, Zr, Ce, In, Zn, and Y, X includes any one or two or more elements selected from the group consisting of F, S, and N, -0.5≤a≤0.5, 0≤b≤0.1, and 0≤x≤0.5)) and any one thereof or a compound of two or more thereof may be included.

Among them, since the capacity characteristics and stability of the battery may be improved, the additional positive electrode active material may include at least one selected from the group consisting of lithium-cobalt-based oxide, lithium-manganese-based oxide, lithium-nickel-manganese-cobalt-based oxide, and lithium-nickel-cobalt-transition metal (M) oxide.

The positive electrode active material may be included in an amount of 80 wt% to 99 wt%, specifically, 90 wt% to 99 wt% with respect to the total weight of the solid content in the positive electrode slurry. In this case, when the amount of the positive electrode active material is 80 wt% or less, since energy density is reduced, capacity may be reduced.

Any conductive agent may be used without particular limitation so long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent is commonly added in an amount of 1 wt% to 30 wt% with respect to the total weight of the solid content in the positive electrode active material layer.

The binder is a component that improves the adhesion between the positive electrode active material particles and the adhesion between the positive electrode active material and a current collector, wherein the binder is commonly added in an amount of 1 wt% to 30 wt% with respect to the total weight of the solid content in the positive electrode active material layer. Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder such as polyvinyl alcohol; a polyolefin-based binder including polyethylene or polypropylene; a polyimide-based binder; a polyester-based binder; and a silane-based binder.

The positive electrode of the present invention as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent, dried, and then rolled to form an active material layer, or a method in which the positive electrode active material layer is cast on a separate support and a film separated from the support is then laminated on the positive electrode collector.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The solvent may include an organic solvent, such as N-methyl-2-pyrrolidone (NMP), and may be used in an amount such that desirable viscosity is obtained when the positive electrode active material as well as optionally the binder and the conductive agent are included. For example, the solvent may be included in an amount such that a concentration of the solid content in the active material slurry including the positive electrode active material, and optionally the binder and the conductive agent is 10 wt% to 90 wt%, preferably, 30 wt% to 80 wt%.

### (2) Negative Electrode

The negative electrode according to the present invention includes a negative electrode active material layer including a negative electrode active material, and the negative electrode active material layer may further include a conductive agent and/or a binder, if necessary.

The negative electrode according to the present invention may include a carbon material capable of reversibly intercalating/deintercalating lithium ions as the negative electrode active material. In particular, when a combination of a first additive and a second additive together with a carbon material capable of reversibly intercalating/deintercalating lithium ions as the negative electrode active material of the lithium secondary battery is included, a reduction reaction of the second additive is progressed in stages after a reduction reaction of the first additive, which is reduced at a higher potential, and thus a film resulting from the second additive is formed on the film resulting from the first additive, thereby forming a robust film, so that a film having excellent durability may be formed. As a result, lithium may be easily intercalated into and deintercalated from the negative electrode active material, and the formed film can withstand the expansion and contraction of the negative electrode active material, thereby obtaining a secondary battery having excellent safety and high-temperature durability.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes. The negative electrode according to the present invention may most preferably include graphite as the negative electrode active material.

The negative electrode active material may further include, as necessary, at least one selected from the group consisting of lithium metal, metal or an alloy of lithium and the metal, a metal composite oxide, a material which may be doped and undoped with lithium, and a transition metal oxide.

As the metal or the alloy of lithium and the metal, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of lithium and the metal may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1) , LiₓWO₂ (0≤x≤1) , and SnₓMe₁₋ₓMe'_{y}O_{z} (Me: manganese (Mn), Fe, Pb, or Ge; Me': Al, boron (B), phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, and lithium vanadium oxide.

The negative electrode active material may be included in an amount of 80 wt% to 99 wt% with respect to the total weight of the solid content in the negative electrode active material layer.

The conductive agent is a component for further improving the conductivity of the negative electrode active material, wherein the conductive agent may be added in an amount of 1 wt% to 20 wt% with respect to the total weight of the solid content in the negative electrode active material layer. The conductive agent is not particularly limited as long as it has conductivity without causing adverse chemical changes in the battery. For example, graphite such as natural graphite or artificial graphite; carbon black such as acetylene black, Ketjen black, channel black, furnace black, lamp black, and thermal black; conductive fibers such as carbon fibers or metal fibers; fluorocarbons; metal powder such as aluminum powder or nickel powder; a conductive whisker such as a zinc oxide whisker or a potassium titanate whisker; a conductive metal oxide such as a titanium oxide; or a conductive material such as a polyphenylene derivative; and the like may be used.

The binder is a component that assists in the binding among the conductive agent, the active material, and the current collector, wherein the binder is commonly added in an amount of 1 wt% to 30 wt% with respect to the total weight of the solid content in the negative electrode active material layer. Examples of the binder may include a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The negative electrode may be prepared by a method of preparing a negative electrode which is known in the art. For example, the negative electrode may be prepared by a method in which a negative electrode collector is coated with a negative electrode active material slurry, which is prepared by dissolving or dispersing the negative electrode active material as well as optionally the binder and the conductive agent in a solvent, rolled and dried to form a negative electrode active material layer, or may be prepared by casting the negative electrode active material layer on a separate support and then laminating a film separated from the support on the negative electrode collector.

The negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, and a non-woven fabric body.

The solvent may include water or an organic solvent such as NMP or alcohol, and may be used in an amount such that desirable viscosity is obtained when the negative electrode active material as well as optionally the binder and the conductive agent are included. For example, the solvent may be included in an amount such that a concentration of the solid content in the active material slurry including the positive electrode active material as well as optionally the binder and the conductive agent is 50 wt% to 75 wt%, preferably, 40 wt% to 70 wt%.

### (3) Separator

A typical porous polymer film generally used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator included in the lithium secondary battery of the present invention, and a typical porous nonwoven fabric, for example, a nonwoven fabric formed of high melting point glass fibers or polyethylene terephthalate fibers may be used, but the present invention is not limited thereto.

A shape of the lithium secondary battery of the present invention is not particularly limited, but a cylindrical type using a can, a prismatic type, a pouch type, or a coin type may be used.

Hereinafter, the present invention will be described in more detail according to examples. However, the invention may be embodied in many different forms and should not be construed as being limited to the embodiments set forth herein. Rather, these example embodiments are provided so that this description will be thorough and complete, and will fully convey the scope of the present invention to those skilled in the art.

### Examples

### Example 1

### (Non-aqueous Electrolyte Preparation)

A non-aqueous solvent was prepared by dissolving LiPF₆ in an organic solvent (ethylene carbonate (EC):ethylmethyl carbonate (EMC)= a volume ratio of 30:70) such that a concentration of the LiPF₆ was 1 M, and a non-aqueous electro lyte was prepared by adding 3 g of a compound (a first additive) in which R₁ is H and n is 5 in Formula 1 above and 0.5 g of vinylene carbonate (VC) (a second additive) to 96.5 g of the non-aqueous solvent.

### (Secondary Battery Preparation)

A positive electrode active material (LiNi_{0.8}Mn_{0.1}Co_{0.1}O₂), a conductive agent (carbon black), and a binder (polyvinylidene fluoride) were added to N-methyl-2-pyrrolidone (NMP), as a solvent, in a weight ratio of 97.5:1:1.5 to prepare a positive electrode active material slurry (concentration of solid content: 60 wt%). A 15 µm-thick positive electrode collector (Al thin film) was coated with the positive electrode active material slurry, dried, and then roll-pressed to prepare a positive electrode.

A negative electrode active material (graphite), a conductive agent (carbon black), and a binder (polyvinylidene fluoride) were added to distilled water, in a weight ratio of 96:0.5:3.5 to prepare a negative electrode active material slurry (concentration of solid content: 50 wt%). A 8 µm-thick negative electrode collector (Cu thin film) was coated with the negative electrode active material slurry, dried, and then roll-pressed to prepare a negative electrode.

The positive electrode and the negative electrode prepared by the above-described method were laminated together with a polyethylene porous film that is a separator to prepare an electrode assembly, and then the electrode assembly was placed in a battery case, 150 µL of the non-aqueous electrolyte was injected thereto, and sealing was performed to prepare a pouch-type lithium secondary battery (battery capacity of 50 mAh) .

### Example 2

A non-aqueous solvent was prepared by dissolving LiPF₆ in an organic solvent (ethylene carbonate (EC):ethylmethyl carbonate (EMC)= a volume ratio of 30:70) such that a concentration of the LiPF₆ was 1 M, and a non-aqueous electro lyte was prepared by adding 3 g of a compound (a first additive) in which R₁ is H and n is 5 in Formula 1 above and 0.5 g of vinylethylene carbonate (VEC) (a second additive) to 96.5 g of the non-aqueous solvent. A secondary battery was prepared in the same manner as in Example 1 except for the secondary battery was prepared by using the above non-aqueous electrolyte.

### Example 3

A non-aqueous solvent was prepared by dissolving LiPF₆in an organic solvent (ethylene carbonate (EC) :ethylmethyl carbonate (EMC)= a volume ratio of 30:70) such that a concentration of the LiPF₆ was 1 M, and a non-aqueous electrolyte was prepared by adding 3 g of a compound (a first additive) in which R₁ is H and n is 5 in Formula 1 above, 0.5 g of vinylene carbonate (VC) (a second additive), and 0.5 g of vinylethylene carbonate (VEC) (the second additive) to 96.0 g of the non-aqueous solvent. A secondary battery was prepared in the same manner as in Example 1 except for the secondary battery was prepared by using the above non-aqueous electrolyte.

### Comparative Example 1

A non-aqueous solvent was prepared by dissolving LiPF₆ in an organic solvent (ethylene carbonate (EC) :ethylmethyl carbonate (EMC) = a volume ratio of 30:70) such that a concentration of the LiPF₆ was 1 M, and a non-aqueous electro lyte was prepared by adding 0.5 g of vinylene carbonate (VC) to 99.5 g of the non-aqueous solvent. A secondary battery was prepared in the same manner as in Example 1 except for the secondary battery was prepared by using the above non-aqueous electrolyte.

### Comparative Example 2

A non-aqueous solvent was prepared by dissolving LiPF₆ in an organic solvent (ethylene carbonate (EC) :ethylmethyl carbonate (EMC) = a volume ratio of 30:70) such that a concentration of the LiPF₆ was 1 M, and a non-aqueous electrolyte was prepared by adding 0.5 g of vinylethylene carbonate (VEC) (a second additive) to 99.5 g of the non-aqueous solvent. A secondary battery was prepared in the same manner as in Example 1 except for the secondary battery was prepared by using the above non-aqueous electrolyte.

### Comparative Example 3

A non-aqueous solvent was prepared by dissolving LiPF₆ in an organic solvent (ethylene carbonate (EC):ethylmethyl carbonate (EMC) = a volume ratio of 30:70) such that a concentration of the LiPF₆ was 1 M, and a non-aqueous electro lyte was prepared by adding 0.5 g of vinylene carbonate (VC) and 0.5 g of vinylethylene carbonate (VEC) to 99.0 g of the non-aqueous solvent. A secondary battery was prepared in the same manner as in Example 1 except for the secondary battery was prepared by using the above non-aqueous electrolyte.

### Comparative Example 4

A non-aqueous solvent was prepared by dissolving LiPF₆ in an organic solvent (ethylene carbonate (EC) :ethylmethyl carbonate (EMC)= a volume ratio of 30:70) such that a concentration of the LiPF₆ was 1 M, and a non-aqueous electro lyte was prepared by adding 3 g of a compound in which R₁ is H and n is 5 in Formula 1 above to 97.0 g of the non-aqueous solvent. A secondary battery was prepared in the same manner as in Example 1 except for the secondary battery was prepared by using the above non-aqueous electrolyte.

### Experimental Example - High-temperature Stability Evaluation

Each of the secondary batteries prepared in Examples 1 to 3 and Comparative Examples 1 to 4 was activated at a constant current (CC) of 0.1 C.

Then, while each of the lithium secondary batteries was heated from 30 °C to 300 °C at a rate of 0.2 K/min, a heat-generation start temperature and the total calorific value of the lithium secondary battery were measured with Multiple Module Calorimeter.

**[Table 1]**

| | Total calorific value (J) |
|---|---|
| Example 1 | 174.3 |
| Example 2 | 171.7 |
| Example 3 | 150.7 |
| Comparative Example 1 | 212.2 |
| Comparative Example 2 | 186.8 |
| Comparative Example 3 | 211.1 |
| Comparative Example 4 | 182.7 |

As shown in Table 1 above, it may be confirmed that Examples 1 to 3 have the total calorific value less than Comparative Examples 1 to 4, and thus have excellent high-temperature stability.

## Claims

1. A lithium secondary battery comprising a negative electrode, a positive electrode, a separator interposed between the negative electrode and the positive electrode, and a non-aqueous electrolyte;
wherein the non-aqueous electrolyte comprises a lithium salt, a non-aqueous organic solvent, a first additive which is a compound represented by Formula 1 below, and a second additive which is at least one of vinylene carbonate and vinylethylene carbonate: 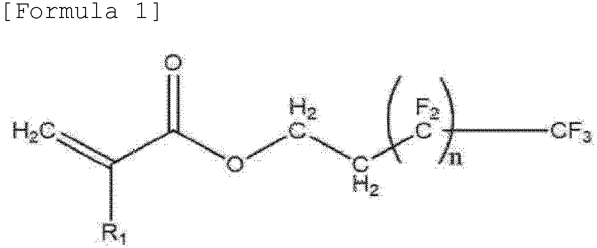
wherein, in Formula 1 above,
R₁ is hydrogen or an alkyl group having 1 to 5 carbon atoms, and
n is an integer of 4 to 8;
the positive electrode comprises a positive electrode active material of Formula 2 below as a positive electrode active material:
[Formula 2] LiₓNiₐCo_{b}M¹_{c}M²_{d}O₂
wherein, in Formula 2 above, M¹ is Mn or a combination of Mn and Al, M² is at least one of Zr, B, W, Mg, Ce, Hf, Ta, La, Ti, Sr, Ba, F, P, and S, 0.90≤x≤1.1, 0.80≤a<1.0, 0<b<0.2, 0<c<0.2, and 0≤d≤0.1; and
the negative electrode comprises a carbon material capable of reversibly intercalating/deintercalating lithium ions as a negative electrode active material.

2. The lithium secondary battery of claim 1, wherein, in Formula 1, R₁ is hydrogen.

3. The lithium secondary battery of claim 1, wherein the first additive is selected from the compounds of Formula 1-1 and Formula 1-2 below:

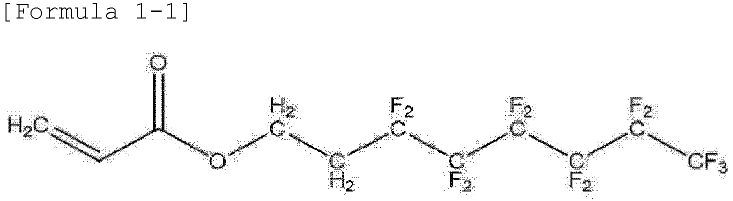

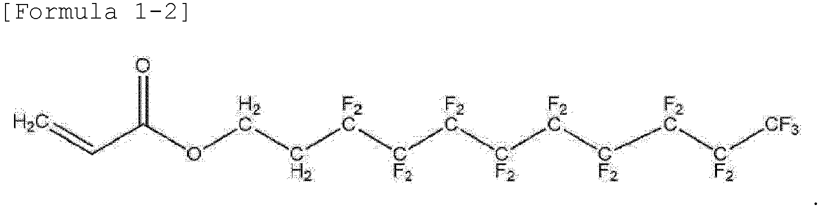

4. The lithium secondary battery of claim 1, wherein the first additive is contained in an amount of 0.1 wt% to 5 wt% with respect to the total weight of the non-aqueous electrolyte.

5. The lithium secondary battery of claim 1, wherein the second additive is contained in an amount of 0.01 wt% to 3 wt% with respect to the total weight of the non-aqueous electrolyte.

6. The lithium secondary battery of claim 1, wherein a weight ratio of the first additive and the second additive is 1:0.002 to 1:30.

7. The lithium secondary battery of claim 1, wherein the lithium salt is contained at a concentration of 0.1 M to 4 M.

8. The lithium secondary battery of claim 1, wherein the non-aqueous electrolyte further comprises at least one third additive selected from a halogen-substituted carbonate-based compound, a sultone-based compound, a sulfate-based compound, a phosphate-based compound, a phosphite-based compound, a borate-based compound, a benzene-based compound, an amine-based compound, a silane-based compound, and a lithium salt-based compound.

## Patentansprüche

1. Lithium-Sekundärbatterie, umfassend eine negative Elektrode, eine positive Elektrode, einen zwischen der negativen Elektrode und der positiven Elektrode vorgesehenen Separator und einen nichtwässrigen Elektrolyten;
worin der nichtwässrige Elektrolyt ein Lithiumsalz, ein nichtwässriges organisches Lösungsmittel, ein erstes Additiv, welches eine durch die nachstehende Formel 1 dargestellte Verbindung ist, und ein zweites Additiv, welches zumindest eines von Vinylencarbonat und Vinylethylencarbonat ist, umfasst: 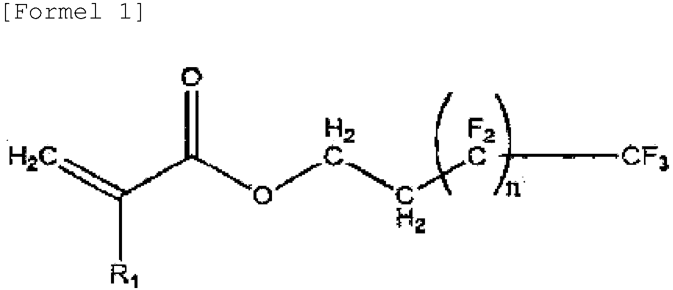
worin in der vorstehenden Formel 1
R₁ Wasserstoff oder eine Alkylgruppe mit 1 bis 5 Kohlenstoffatomen ist und
n eine ganze Zahl von 4 bis 8 ist;
wobei die positive Elektrode ein Positivelektroden-Aktivmaterial der nachstehenden Formel 2 als ein Positivelektroden-Aktivmaterial umfasst:
[Formel 2] LiₓNiₐCo_{b}M¹_{c}M²_{d}O₂
worin in der vorstehenden Formel 2 M¹ Mn oder eine Kombination von Mn und Al ist, M² zumindest eines von Zr, B, W, Mg, Ce, Hf, Ta, La, Ti, Sr, Ba, F, P und S ist und 0,90≤x≤1,1, 0,80≤a<1,0, 0<b<0,2, 0<c<0,2 und 0≤d≤0,1 erfüllt; und
worin die negative Elektrode ein Kohlenstoffmaterial, das in der Lage ist, Lithiumionen reversibel zu interkalieren/deinterkalieren, als ein Negativelektroden-Aktivmaterial umfasst.

2. Lithium-Sekundärbatterie gemäß Anspruch 1, worin in der Formel 1 R₁ Wasserstoff ist.

3. Lithium-Sekundärbatterie gemäß Anspruch 1, worin das erste Additiv ausgewählt ist aus Verbindungen der nachstehenden Formel 1-1 und Formel 1-2:

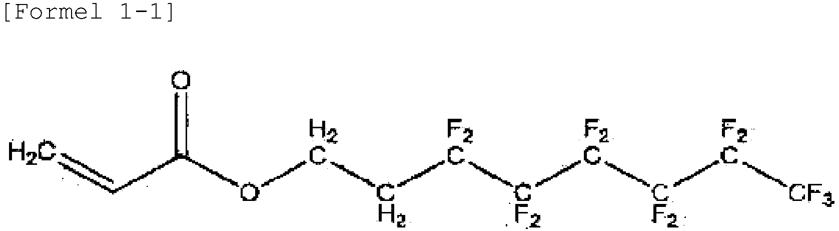

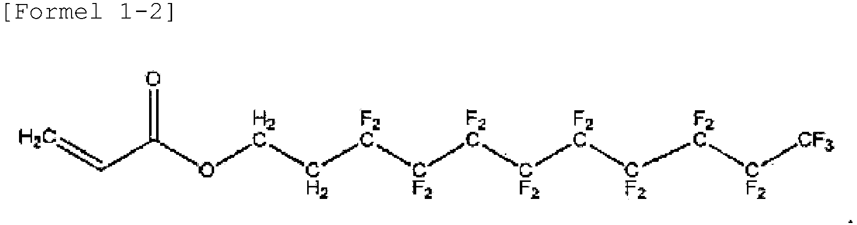

4. Lithium-Sekundärbatterie gemäß Anspruch 1, worin das erste Additiv in einer Menge von 0,1 Gew.-% bis 5 Gew.-% enthalten ist, gezogen auf das Gesamtgewicht des nichtwässrigen Elektrolyten.

5. Lithium-Sekundärbatterie gemäß Anspruch 1, worin das zweite Additiv in einer Menge von 0,01 Gew.-% bis 3 Gew.-% enthalten ist, bezogen auf das Gesamtgewicht des nichtwässrigen Elektrolyten.

6. Lithium-Sekundärbatterie gemäß Anspruch 1, worin das Gewichtsverhältnis des ersten Additivs zum zweiten Additiv 1:0,002 bis 1:30 beträgt.

7. Lithium-Sekundärbatterie gemäß Anspruch 1, worin das Lithiumsalz in einer Konzentration von 0,1 M bis 4 M enthalten ist.

8. Lithium-Sekundärbatterie gemäß Anspruch 1, worin der nichtwässrige Elektrolyt ferner zumindest ein drittes Additiv umfasst, ausgewählt aus einer Halogensubstituierten Carbonat-basierten Verbindung, einer Sulton-basierten Verbindung, einer Sulfat-basierten Verbindung, einer Phosphat-basierten Verbindung, einer Phosphit-basierten Verbindung, einer Borat-basierten Verbindung, einer Benzol-basierten Verbindung, einer Amin-basierten Verbindung, einer Silan-basierten Verbindung und einer Lithiumsalz-basierten Verbindung.

## Revendications

1. Batterie au lithium comprenant une électrode négative, une électrode positive, un séparateur interposé entre l'électrode négative et l'électrode positive, et un électrolyte non aqueux ;
dans laquelle l'électrolyte non aqueux comprend un sel de lithium, un solvant organique non aqueux, un premier additif qui est un composé représenté par la formule 1 ci-dessous, et un deuxième additif qui est au moins l'un parmi le carbonate de vinylène et le carbonate de vinyléthylène : 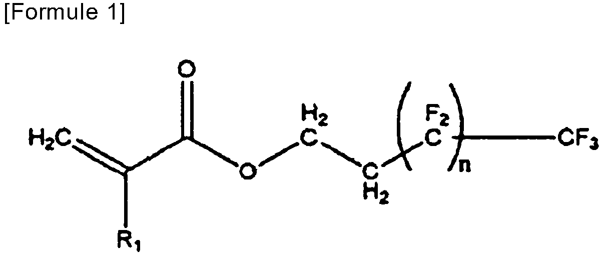
dans laquelle, dans la formule 1 ci-dessus,
R₁ est l'hydrogène ou un groupe alkyle présentant 1 à 5 atomes de carbone, et
n est un nombre entier de 4 à 8 ;
l'électrode positive comprend un matériau actif d'électrode positive de la formule 2 ci-dessous en tant que matériau actif d'électrode positive :
[Formule 2] LiₓNiₐCo_{b}M¹_{c}M²_{d}O₂
dans laquelle, dans la formule 2 ci-dessus, M¹ est Mn ou une combinaison de Mn et d'Al, M² est au moins l'un parmi Zr, B, W, Mg, Ce, Hf, Ta, La, Ti, Sr, Ba, F, P, et S, 0,90≤x≤1,1, 0,80≤a<1,0, 0<b<0,2, 0<c<0,2, et 0≤d≤0,1 ; et
l'électrode négative comprend un matériau carboné capable d'intercaler/de désintercaler de manière réversible des ions lithium en tant que matériau actif d'électrode négative.

2. Batterie au lithium selon la revendication 1, dans laquelle, dans la formule 1, R₁ est l'hydrogène.

3. Batterie au lithium selon la revendication 1, dans laquelle le premier additif est sélectionné parmi les composés de la formule 1-1 et de la formule 1-2 ci-dessous :

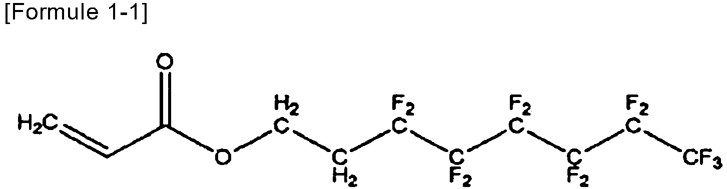

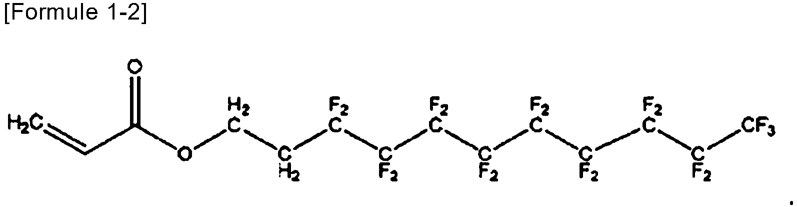

4. Batterie au lithium selon la revendication 1, dans laquelle le premier additif est contenu en une quantité de 0,1 % en poids à 5 % en poids par rapport au poids total de l'électrolyte non aqueux.

5. Batterie au lithium selon la revendication 1, dans laquelle le deuxième additif est contenu en une quantité de 0,01 % en poids à 3 % en poids par rapport au poids total de l'électrolyte non aqueux.

6. Batterie au lithium selon la revendication 1, dans laquelle un rapport pondéral du premier additif et du deuxième additif est de 1:0,002 à 1:30.

7. Batterie au lithium selon la revendication 1, dans laquelle le sel de lithium est contenu à une concentration de 0,1 M à 4 M.

8. Batterie au lithium selon la revendication 1, dans laquelle l'électrolyte non aqueux comprend en outre au moins un troisième additif sélectionné parmi un composé à base de carbonate substitué par un halogène, un composé à base de sultone, un composé à base de sulfate, un composé à base de phosphate, un composé à base de phosphite, un composé à base de borate, un composé à base de benzène, un composé à base d'amine, un composé à base de silane et un composé à base de sel de lithium.
